# EUROPEAN PATENT SPECIFICATION

(11) **EP 1 833 897 B1**
(45) Date of publication and mention of the grant of the patent: **12.10.2011**
(21) Application number: 05821467.7
(22) Date of filing: 15.12.2005
(51) Int. Cl.: C08K 3/00, C08K 3/20, C08K 3/28, C08L 101/12

(54) **SEMI-CRYSTALLINE POLYMER COMPOSITION AND ARTICLE MANUFACTURED THEREFROM**
TEILKRISTALLINES POLYMER ENTHALTENDE ZUSAMMENSETZUNG UND DARAUS HERGESTELLTER ARTIKEL
COMPOSITION SEMI-CRISTALLINE DE POLYMÈRES ET ARTICLE FABRIQUÉ À PARTIR DE CELLE-CI

(30) Priority: 17.12.2004 US 636531 P; 23.08.2005 US 710161 P
(43) Date of publication of application: 19.09.2007
(73) Proprietor: Solvay Advanced Polymers, L.L.C., Alpharetta, GA 30005-3914 (US)
(72) Inventor: CROWE, Christie, W., Alpharetta, GA 30005 (US); CUPTA, Glenn, W., Roswell, GA 30075 (US)
(74) Representative: Jacques, Philippe
(86) International application number: PCT/EP2005/056803
(87) International publication number: WO 2006/064032

(56) References cited:
- US-A1- 2002 167 763
- US-A1- 2003 040 563
- DATABASE WPI Section Ch, Week 199235 Derwent Publications Ltd., London, GB; Class A26, AN 1992-289001 XP002372606 & JP 04 198265 A (TOYOBO KK) 17 July 1992 (1992-07-17)
- DATABASE WPI Section Ch, Week 198211 Derwent Publications Ltd., London, GB; Class A18, AN 1979-47853B XP002372607 & JP 57 009595 B (HITACHI CABLE LTD) 22 February 1982 (1982-02-22)

## Description

This application claims priority to U.S. provisional application 60/636531, filed December 17, 2004, and to U.S. provisional application 60/710161, filed August 23,2005, whose disclosures are incorporated herein by reference.

The present invention concerns a semi-crystalline polymer composition, in particular a polyphthalamide composition, and an article manufactured therefrom.

Most of prior art semi-crystalline polymer compositions and articles manufactured therefrom do not meet the requirements which are necessary for making them suitable for certain end-uses. In particular, they have usually a too low thermal conductivity. To face this problem, it has already been proposed to add various inorganic fillers to the semi-crystalline composition.

For example, US 6,600,633 describes an overmold for a disc drive actuator assembly to encapsulate and support an actuator coil material comprising (i) a base resin, such as a liquid crystal polymer, a polyethylene naphthalate, a polyethylene terephthalate, a polybutylene terephthalate, a polyamide, a polyphthalamide, a polyphenylene sulphide, a polycarbonate, a polyetheretherketone or a polyphenylene oxide, and (ii) a ceramic filler blended with the resin such as boron nitride, alumina, aluminum nitride, magnesium oxide, zinc oxide, silicon carbide, beryllium oxide and chromium oxide (see col. 4,1. 10-25). While it is true that US 6,600,633 further precises that the ceramic filler can notably consist of an indifferent mixture of the above listed fillers (see col. 4,1. 25-27), it does not disclose any specific combination of the above listed fillers ; nor does it suggest any benefit that would result from such a specific combination; conversely, US 6,600,633 gives a clear preference for the use of either boron nitride or of alumina (i.e. aluminum oxide) as sole ceramic filler (see col. 4,1. 20-22).

Another example is specifically directed to polyphthalamide compositions: JP 2004/059,638, in the name of Kuraray, teaches that a polyphthalamide composition excellent in heat conductivity, heat resistance, low water absorption and moldability, can be obtained by blending a polyphthalamide containing 60-100 mole % terephthalic acid units and 60-100 mole % 1,9-nonanediamine and/or 2-methyl-1,8-octanediamine units with a heat conductive filler and optionally a plasticizer. Examples of suitable heat conductive fillers are listed in section [0020]; among them are, notably, calcium silicate whiskers, carbon fibers, metal oxides, metal powders, alumina, oxides such as gold, silver, copper, iron, aluminum, magnesium, beryllium and titanium oxides, boron nitride and aluminum nitride. While JP 2004/059,638 mentions that, generically speaking, the heat conductive filler can consist of one, two or more of the above listed fillers, the 6 therein examplified compositions all comprise a sole ceramic filler (see table 1); more generally, like US 6,600,633, JP 2004/059,638 does not describe any specific combination of the above listed fillers, nor does it suggest any benefit that could result from such a specific combination of inorganic fillers.

The compositions and/or articles disclosed in US 6,600,633 and JP 2004/059,638 still present several drawbacks. The improvement in thermal conductivity achieved with the above detailed compositions and/or articles is in general not sufficient, or requires a high amount of an expensive inorganic filler, such as boron nitride ; besides, using a very high amount of certain cheaper inorganic fillers, like aluminum oxide, can be detrimental to some other important properties of the semi-crystalline polymer composition, like the electrical insulating properties. Then, improved compositions and/or articles are still strongly needed.

A first objective of the present invention is to provide a semi-crystalline polymer composition, in particular a polyphthalamide composition, which provides various advantages over prior art semi-crystalline polymer compositions, in particular an improved thermal conductivity, without retaining their drawbacks, in particular poor insulating properties.

With this end in view, the present invention concerns a polymer composition comprising
■ at least one semi-crystalline polymer (SCP) chosen from polyamides,
■ at least one oxide (OX) chosen from acid oxides of an element having an electronegativity of at most 2.2 and amphoteric oxides, and
■ at least one nitride (NI) of an element having an electronegativity of from 1.3 to 2.5, wherein the oxide (OX) over nitrile (NI) weight ratio [(OX) : (NI)] is above 2.0 and is below 12.

For the purpose of the present invention, an "element" is intended to denote an element from the Periodic Table of the Elements.

The value of the electronegativity of an element, as well as the acid, amphoteric or basic character of the oxide derived from an element at a certain stage of oxidation that are to be taken into consideration for the purpose of the present invention are those reported in the Periodic Table of the Elements edited by J. Breysem, c/o VEL s.a., "Produits, appareillage et fournitures pour le laboratoire", printed in Belgium in February 1987.

For the purpose of the present invention, an "amphoteric oxide" is intended to denote either a predominantly acid amphoteric oxide or an amphoteric oxide in the strictest meaning of the term (i.e. without acid or basic predominance). A predominantly basic amphoteric oxide is not an amphoteric oxide to the purpose of the present invention.

The semi-crystalline polymer (SCP) has advantageously a heat deflection temperature of above 80°C under a load of 1.82 MPa when measured according to ASTM D648.

The semi-crystalline polymer (SCP) is advantageously a polycondensation polymer. In addition, the semi-crystalline polymer (SCP) comprises advantageously recurring units comprising at least one arylene group. The semi-crystalline polymer (SCP) is preferably a polycondensation polymer comprising recurring units comprising at least one arylene group.

The semi-crystalline polymer (SCP) is preferably a polyamide.

The polyamide can be notably an aliphatic polyamide such as nylon 6, nylon 66 or nylon 12, a polyamide of which less than or equal to 50 mole % of the recurring units comprise at least one aromatic group, or an aromatic polyamide as defined hereafter.

For the purpose of the present invention, "aromatic polyamide" is intended to denote any polymer more than 50 mole % of the recurring units comprise at least one aromatic group.

Polyamides are notably formed by the polycondensation reaction between at least one diacid and one diamine, and/or by the auto-polycondensation reaction of at least one aminoacid

The aromaticity of the aromatic recurring units of the aromatic polyamide can come from the diacid and/or from the diamine and/or from the aminoacid. Non limitative examples of aromatic diacids are phthalic acids and naphthalenedicarboxylic acids. Metaxylylenediamine is an example of aromatic diamine.

A first group of preferred aromatic polyamides consists of PMXDAs, i.e. aromatic polyamides of which more than 50 mole % of the recurring units are formed by the polycondensation reaction between at least one aliphatic diacid and metaxylylenediamine.

The aliphatic diacid can be notably adipic acid.

Suitable PMXDAs are notably available as IXEF^{Ⓡ} PMXDAs from Solvay Advanced Polymers, L.L.C.

A second group of preferred aromatic polyamides consists of polyphthalamides, i.e. aromatic polyamides of which more than 50 mole % of the recurring units are formed by the polycondensation reaction between at least one phthalic acid and at least one aliphatic diamine.

The aliphatic diamine can be notably hexamethylenediamine, nonanediamine, 2-methyl-1,5-pentadiamine, and 1,4-diaminobutane.

Suitable polyphthalamides are notably available as AMODEL^{®} polyphthalamides from Solvay Advanced Polymers, L.L.C.

Among polyphthalamides, polyterephthalamides are often preferred. However, poly(tere/iso)phthalamides may be preferred in certain particular embodiments of the present invention.

For the purpose of the present invention, poly(tere/iso)phthalamides are defined as aromatic polyamides of which (i) more than 50 mole % of the recurring units are formed by the polycondensation reaction between terephthalic acid, isophthalic acid and at least one diamine, (ii) more than 25 and up to 50 mole % of the recurring units are formed by the polycondensation reaction between terephthalic acid and at least one diamine, (iii) from 1 to 25 mole % of the recurring units are formed by the polycondensation reaction between terephthalic acid and at least one diamine. Preferably, poly(tere/iso)phthalamides further comprise recurring units formed by the polycondensation reaction between at least one aliphatic diacid and at least one aliphatic diamine. In addition, poly(tere/iso)phthalamides are preferably free of recurring units formed by the polycondensation reaction between o-phthalic acid and at least one diamine.

For the purpose of the present invention, polyterephthalamides are defined as aromatic polyamides of which more than 50 mole % of the recurring units are formed by the polycondensation reaction between terephthalic acid and at least one diamine.

A first class of preferred polyterephthalamides consists of polyterephthalamides the recurring units of which are formed by the polycondensation reaction between terephthalic acid and at least one aliphatic diamine [class (I)].

A second class of preferred polyterephthalamides consists of polyterephthalamides the recurring units of which are formed by the polycondensation reaction between terephthalic acid, isophthalic acid and at least one aliphatic diamine [class (II)].

A third class of preferred polyterephthalamides consists of polyterephthalamides the recurring units of which are formed by the polycondensation reaction between terephthalic acid, at least one aliphatic diacid and at least one aliphatic diamine [class (III)]. Such recurring units are respectively referred to as terephthalamide and aliphatic acid-amide recurring units.

Within class (III), a first preferred subclass consists of polyterephthalamides in which the mole ratio of the terephthalamide recurring units with respect to the total number of moles of the recurring units (i.e. the terephthalamide plus the aliphatic acid-amide recurring units) is 60 mole % or more; in addition, it is advantageously 80 mole % or less, and preferably 70 mole % or less [subclass (III-1)].

Within class (III), a second preferred subclass consists of polyterephthalamides in which the mole ratio of the terephthalamide recurring units with respect to the total number of moles of the recurring units (i.e. the terephthalamide plus the aliphatic acid-amide recurring units) is less than 60 mole % [subclass (III-2)].

A fourth class of preferred polyterephthalamides consists of polyterephthalamides the recurring units of which are formed by the polycondensation reaction between terephthalic acid, isophthalic acid, at least one aliphatic diacid and at least one aliphatic diamine [class (IV)].

The semi-crystalline polymer (SCP) is contained in the polymer composition in an amount of advantageously at least 10 wt %, preferably at least 20 wt % and more preferably at least 30 wt % (based on the total weight of the composition).

The polymer composition according to anyone of the preceding claims, wherein the semi-crystalline polymer (SCP) is present in an amount of advantageously at most 70 wt %, preferably at most 60 wt % and more preferably at most 50 wt % (based on the total weight of the composition).

Non limitative examples of acid oxides of an element having an electronegativity (ε) of at most 2.2 are boron oxide (ε=2.0), silicium oxide (ε=1.8), germanium (II) oxide (ε=1.8), phosphorus (III) and (V) oxides (ε=2.1), arsenic (V) oxide (ε=2.0), antimony (V) oxide (ε=1.9), bismuth (V) oxide ε=1.9), tantalum (IV) oxide (ε=1.5), wolfram (VI) oxide (ε=1.7), manganese (VII) oxide (ε=1.5), rhenium (IV) and (VII) oxides (ε=1.9).

Non limitative examples of amphoteric oxides are beryllium oxide (ε=1.5), aluminum oxide (ε=1.5), gallium oxide (ε=1.6), germanium (IV) oxide (ε=1.8), tin (II) and (IV) oxides (ε=1.8), lead (IV) oxide (ε=1.8), arsenic (III) oxide (ε=2.0), antimony (III) oxide (ε=1.9), titanium (IV) oxide (ε=1.5), vanadium (IV) and (V) oxides (ε=1.6), niobium (V) oxide (ε=1.6), tantalum (V) oxide (ε=1.5), manganese (IV) oxide (ε=1.5) and zinc oxide (ε=1.6).

In the above lists, ε denotes the electronegativity of the element from which the oxide is derived.

The oxide (OX) is preferably an amphoteric oxide.

Besides, the oxide (OX) is an oxide of an element having an electronegativity of preferably at most 2.0, more preferably at most 1.8, and still more preferably at most 1.6. In addition, the oxide (OX) is an oxide of an element having preferably an electonegativity of at least 1.4.

The most preferred oxide (OX) is aluminum oxide.

Non limitative examples of nitrides (NI) of an element having an electronegativity (ε) of from 1.3 to 2.5 are listed « Handbook of Chemistry and Physics », CRC Press, 64^{th} edition, pages B-65 to B-158. The code into brackets is the one attributed by the CRC Handbook to the concerned nitride, while ε denotes the electronegativity of the element from which the nitride is derived. Then, nitrides (NI) of an element having an electronegativity (ε) of from 1.3 to 2.5 suitable to the purpose of the present invention are notably aluminum nitride (AIN, a45, ε=1.5), antimony nitride (SbN, a271, ε=1.9), beryllium nitride (Be₃N₂, b123, ε=1.5), boron nitride (BN, b203, ε=2.0), chromium nitride (CrN, c406, ε=1.6), copper nitride (Cu₃N, c615, ε=1.9), gallium nitride (GaN, g41, ε=1.6), trigermanium dinitride (Ge₃N₂, g82, ε=1.8), trigermanium tetranitride (Ge₃N₄, g83, ε=1.8), hafnium nitride (HfN, h7, ε=1.3), iron nitrides like Fe₄N (i151, ε=1.8) and Fe₂N or Fe₄N₂ (i152, ε=1.8), mercury nitride (Hg₃N₂, m221, ε=1.9), niobium nitride (n109, ε=1.6), silicium nitride (Si₃N₄, s109, ε=1.8), tantalum nitride (TaN, t7, ε=1.5), titanium nitride (Ti₃N₄, t249, ε=1.5), wolfram dinitride (WN₂, t278, ε=1.7), vanadium nitride (VN, v15, ε=1.6), zinc nitride (Zn₃N₂, z50, ε=1.6) and zirconium nitride (ZrN, z105, ε=1.4).

The nitride (NI) is a nitride of an element having an electronegativity of preferably at least 1.6, and more preferably at least 1.8. In addition, the nitride (NI) is the nitride of an element having an electronegativity of preferably at most 2.2.

Besides, the nitride (NI) is chosen preferably from nitrides of an element chosen from Groups IIIa, IVa, IVb, Va, Vb, VIa, VIb, VIIb and VIII of the Periodic Table of the Elements, and more preferably from nitrides of an element of Group IIIa of the Periodic Table of the Elements.

The most preferred nitride (NI) is boron nitride.

The oxide (OX) and the nitride (NI) are contained in the polymer composition in a cumulated amount [(OX) + (NI)] of advantageously above 40 wt %, and preferably above 50 wt % (based on the total weight of the composition). In addition, the oxide (OX) and the nitride (NI) are contained in the polymer composition in a cumulated amount [(OX) + (NI)] of advantageously below 80 wt %, and preferably below 70 wt % (based on the total weight of the composition).

The oxide (OX) over nitride (NI) weight ratio [(OX):(NI)] is 2.0, and still more preferably above 2.5. In addition, the oxide (OX) over nitride (NI) weight ratio [(OX):(NI)] is below 12.0, preferably below 6.0, more preferably below 4.0, and still more preferably below 3.5.

The polymer composition can optionally comprise additional ingredients, e.g. impact modifiers such as elastomers, fillers such as glass fiber and talc, mold release agents, plasticizers, lubricants, anti-degradation stabilizers including thermal stabilizers, light stabilizers and antioxidants.

The levels of these optional additional ingredients is determined for the particular use envisioned, with up to 50 wt %, preferably up to 10 wt % and more preferably up to 5 wt % (based on the total weight of the polymer composition) of such additional additives considered to be within the range of ordinary practice in the art.

Another objective of the present invention is to provide a part of an article or an article comprising a semi-crystalline polymer composition, in particular a power tool armature comprising a polyphthalamide composition, which provides various advantages over prior art parts and articles, in particular an improved thermal conductivity, without retaining their drawbacks, in particular poor insulating properties.

With this end in view, the present invention concerns a part of an article, said part comprising the polymer composition as above described. Preferably, the part consists of the polymer composition. A part of an article which is especially envisioned within the frame of the present invention is an encapsulating part. Another part of an article which is especially envisioned within the frame of the present invention is a reflector cup.

With the same end in view, the present invention concerns also an article comprising the polymer composition as above described. Preferably, the article consists of the polymer composition.

Still with the same end in view, the present invention further concerns an article comprising at least one part comprising the polymer composition as above described. Preferably, the part consists of the polymer composition.

The article can be chosen from electronic components, optoelectronic components, computer components, surface-mounted technology components and cell phone components.

It can also be chosen from sensors such as automotive sensors.

It can also be chosen from electric components such as electric motor end caps, transformer components and battery components.

It can also be chosen from fuel cells components.

It can also be chosen from cookwares and heat elements.

It can also be chosen from mechanical components such as bearings and bushings.

A first article which is especially envisioned within the frame of the present invention is an electrical motor armature comprising a coil encapsulated by an overmold part consisting of the polymer composition as above described.

The encapsulation of the overmold part can be notably achieved by overcoating.

The overmold part can be a film wound through-out the armature.

The coil can notably consist of copper windings. When energized, the copper windings create usually an electrical field, thus a magnetic field, that drives the motor.

The overmold part eliminates advantageously the possibility of grit eroding the coating on the copper windings. The windings are thereby usually maintained with no short circuits, retaining power.

The conductivity of the overmold part allows advantageously the conventional heat removal system (air flow through the motor) to remain effective.

Another article which is especially envisioned within the frame of the present invention is a disc drive actuator assembly comprising an actuator coil encapsulated and supported by an overmold part consisting of the polymer composition as above described.

Still another article which is especially envisioned within the frame of the present invention is an optoelectronic component that emits a radiation, hereafter "emission apparatus". Non limitative examples of emission apparatuses are keyless entry systems of an automobile, lightings in a refrigerator, liquid crystal display apparatuses, automobile front panel lighting apparatuses, desk lamps, headlights, household electrical appliance indicators and outdoor display apparatuses such as traffic signs, and optoelectronic devices comprising at least one semi-conductor chip that emits and/or transmits electromagnetic radiation commonly known as Light Emitting Diodes devices (LEDs). Preferably, the emission apparatus is a Light Emitting Diode device (LED).

The LED comprises usually at least one part comprising, and preferably consisting of, the polymer composition as above described.

The part is preferably chosen from basic housings and heatsink slugs. The part acts usually as reflector.

Preferably, more than 50 wt % of the part comprises the polymer composition (the part can possibly further contain notably a metal; for example, for certain end uses, the surface of the part acting as reflector may be metal plated). More preferably, more than 90 wt % of the part comprises the polymer composition. Still more preferably, the part consists essentially of the polymer composition. The most preferably, the part consists of the polymer composition.

LEDs are preferably chosen from the group of top view LEDs, side view LEDs and power LEDs. Top view and side view LEDs comprise usually a basic housing, which, in general, acts as reflector; besides, top view and side view LEDs usually do not comprise any heatsink slug. On the other hand, power LEDs comprise usually a heatsink slug, which, in general, acts as reflector; power LEDs usually further comprise a basic housing, which is a part distinct from the heatsink slug.

The top view LEDs are notably used in automotive lighting applications such as instrumental panel displays, stop lights and turn signals. The side view LEDs are notably used for mobile appliance applications such as, for example, cell phones and PDAs. The power LEDs are notably used in flashlights, automotive day light running lights, signs and as backlight for LCD displays and TVs.

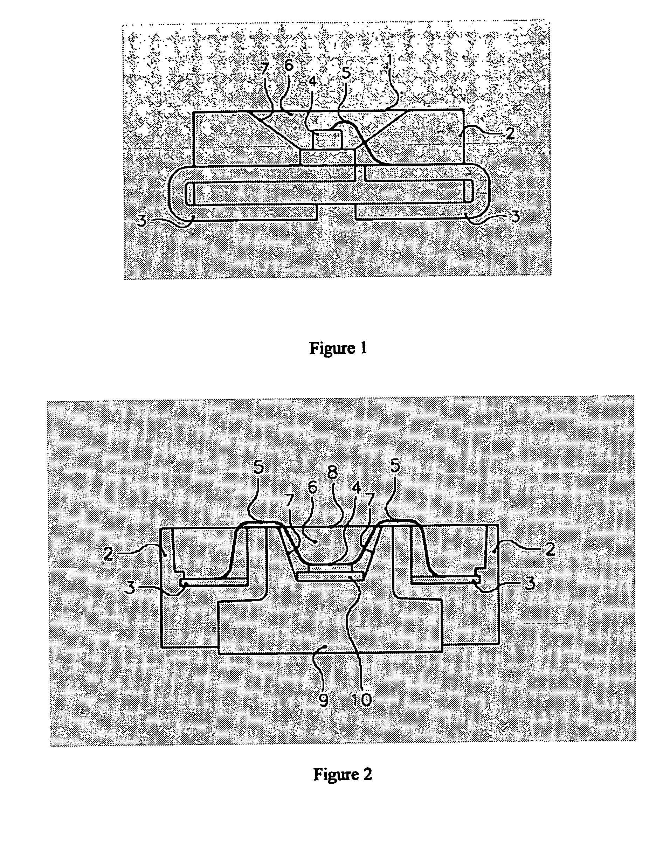

An exemplary embodiment of a top view LED is provided in **Figure 1****,** which illustrates a sectional view of said embodiment. The top view LED **1** comprises a basic housing **2** comprising, and preferably consisting of, the polymer composition. As will be detailed hereafter, the basic housing **2** acts also as reflector cup. No heatsink slug is present

Usually, the LED **1** further comprises a prefabricated electrical lead frame **3**. Lead frame **3** is advantageously encapsulated by injection molding with the polymer composition included in the basic housing **2.**

The basic housing **2** has a cavity **6.** A semiconductor chip **4** that emits electromagnetic radiations, such as a LED chip, is mounted inside such cavity. The semiconductor chip **4** is generally bonded and electrically contact-connected on one of the lead frame terminals by means of a bonding wire **5.**

A transparent or translucent potting compound (e.g. an epoxy, a polycarbonate or a silicone resin, not shown in **Figure 1****)** is generally built into the cavity in order to protect the LED chip.

It is customary, for the purpose of increasing the external efficiency of the LED chip, to shape the cavity of the basic housing with non perpendicular inner areas in such a way that the cavity acquires a form opening towards the front side (the sectional view of the inner wall of the cavity may have, for instance, the form of an oblique straight line, as in the exemplary embodiment in accordance with **Figure 1**, or that of a parabola).

Thus, the inner walls **7** of the cavity serve as reflector cup for the radiation which is emitted laterally by the semiconductor chip, notably reflecting this radiation towards the front side of the basic housing.

It goes without saying that the number of chips which can be mounted in the cavity of the basic housing, as well as the number of cavities which can be formed inside a basic housing, is not restricted to one.

An exemplary embodiment of a power LED is provided in **Figure 2****,** which illustrates a sectional view of said embodiment. The power LED **8** comprises a basic housing **2** comprising, and preferably consisting of, the polymer composition. Usually, the LED **8** further comprises a prefabricated electrical lead frame **3.**

The power LED **8** also comprises a carrier body or heatsink slug **9** which may be of metal (e.g. aluminum) or which may comprise, or consist of, the polymer composition. A cavity **6** is realized in the upper portion of the heatsink slug 9.

A semiconductor LED chip **4** that emits electromagnetic radiations is mounted on the bottom area of cavity **6** and it is generally fixed by means of a chip carrier substrate or solder connection **10** to the heatsink slug **9.** The solder connection **10** is generally an epoxy resin or another equivalent adhesive material.

The LED chip is generally conductively connected to the electric terminals of the lead frame **3** via the bonding wires **5.**

The inner walls **7** of the cavity **6** run generally from the bottom area of the cavity to the front side so as to form a reflector cup increasing the external efficiency of the LED chip. The inner walls **7** of the reflector cup may be, for example, straight and oblique (like in the exemplary embodiment in accordance with **Figure 2****)** or concavely curved.

The lead frame **3** and the heatsink slug **9** are encapsulated within the basic housing **2.** In order to protect the LED chip **4,** the cavity is generally completely filled, likewise in the first exemplary embodiment of **Figure 1****,** with a radiation-transmissive, for example transparent, encapsulation compound (the encapsulant is not shown in **Figure 2**).

The invented polymer composition is particularly suitable for making basic housings and/or heatsink slugs as above described, because, besides having excellent thermal conductivity thus allowing the heat produced by the optoelectronic device to be easily dissipated, it has also good mechanical properties, high heat deflection temperature, good plateability, good adhesion to lead frame, excellent optical properties, notably excellent initial whiteness and high retention of reflectance.

The optical properties of the polymer composition are generally largely enough for the purpose of making reflector cups having inner walls with excellent reflectance.

The polymer composition according to the present invention exhibits advantageously improved whiteness and surface aspect over prior art polymer compositions.

Thus, another aspect of the present invention is to a part susceptible of acting as reflector in an emission apparatus, especially in a LED, said part comprising the polymer composition as above described.

Preferably, more than 50 wt % of the part comprises the polymer composition (the part can possibly further contain notably a metal; for example, for certain end uses, the surface of the part acting as reflector may be metal plated). More preferably, more than 90 wt % of the part comprises the polymer composition. Still more preferably, the part consists essentially of the polymer composition. The most preferably, the part consists of the polymer composition.

Preferably, the part is susceptible of constituting the basic housing and/or the heatsink slug of a LED. More preferably, the part is either the basic housing of a LED or the heatsink slug of a LED.

The present invention is not limited to the above cited articles.

### Example 1 (according to the invention)

A polyterephthalamide resin of class (III) - subclass (III-2), as above defined, commercially available from SOLVAY ADVANCED POLYMERS, L.L.C. as AMODEL^{®} polyphthalamide, was physically blended in a vessel (drum tumbled) with the Additives specified in Table 1 until a homogeneous mixture was obtained. The blended mixture was fed to the first barrel of a twin screw extruder comprising 8 barrels via a loss in weight feeder. In barrel 5 of the extruder, a side stuffer introduced the thermal conductive filler along with a reinforcing filler as specified in Table 1. The blended mixture was compressed and cooled in barrel 8. An extrudate (E1) was recovered from barrel 8. The extrudate was cooled and pelletized with conventional equipment.

The thermal conductivity of extrudate (E1) was measured according to ASTM D5930-01. (E1) had a thermal conductivity of about 3.5 W/(m.K).

### Example 2 (according to the invention)

An extrudate (E2) was prepared by physically blending and extruding the components specified in Table 1, following a procedure identical to that of Example 1.

(E2) had a thermal conductivity (ASTM D5930-01) of about 2.5 W/(m.K).

### Example 3 (control)

An extrudate (E3) was prepared by physically blending and extruding the components specified in Table 1, following a procedure identical to that of Example 1.

(E3) had a thermal conductivity (ASTM D5930-01) of about 1 W/(mK).

### Example 4 (control)

An extrudate (E4) was prepared physically blending and extruding the components specified in Table 1, following a procedure identical to that of Example 1.

(E4) had a thermal conductivity (ASTM D5930-01) of about 0.5 W/(mK).

### Example 5 (control)

An extrudate (E5) was prepared physically blending and extruding the components specified in Table 1, following a procedure identical to that of Example 1.

(E5) had a thermal conductivity (ASTM D5930-01) of about 3 W/(mK).

**Table 1. Semi-crystalline Polymer Compositions**

| Components | | Example 1 (according to the invention) | Example 2 (according to the invention) | Example 3 (control) | Example 4 (control) | Example 5 (control) |
|---|---|---|---|---|---|---|
| | | Wt(%) | Wt(%) | Wt(%) | Wt% | Wt% |
| Semi-crystalline polymer | Polyterephthalamide class (III) - subclass (III-2) | 27.4 | 28.5 | 29.28 | 48.8 | 49.85 |
| Thermally conductive filler [(OX) + (NI)] | Aluminum oxide | 45 | 40 | 70.0 | 50 | - |
| | Titanium dioxide | - | 10 | - | - | - |
| | Boron nitride | 15 | 10 | - | - | 50 |
| Reinforcing filler | Fiberglass | 5.8 | 5 | - | - | - |
| Additives | Elastomeric impact modifier | 6 | 5 | - | - | - |
| | Thermal stabilizer | 0.42 | 1.5 | 0.30 | 0.5 | - |
| | Carbon black | 0.38 | - | 0.12 | 0.2 | 0.15 |
| | Lubricant | - | - | 0.30 | 0.5 | - |

As previously pointed out, a first objective of the present invention is to provide a semi-crystalline polymer composition, in particular a polyphthalamide composition, having various advantages over prior art semi-crystalline polymer compositions and in particular an improved thermal conductivity.

For the seek of clarity, semi-crystalline polymer compositions which have thermal conductivity values significantly higher than 3 W/(m.K) are usually considered by the skilled in the art as top-rank materials and are placed in the "VERY HIGH performance level" segment. Polymer compositions whose thermal conductivity is from 2 to 3 W/(m.K) are usually considered by the skilled in the art as materials in the "HIGH performance level" segment. Polymer compositions whose thermal conductivity is from 1 to 2 W/(m.K) are usually considered by the skilled in the art as materials in the "MEDIUM performance level" segment. Finally, polymer compositions whose thermal conductivity is below 1 W/(mK) are usually considered by the skilled in the art as materials in the "LOW performance level" segment.

Extrudates (E1) to (E5) have been ranked accordingly in Table 2.

As already mentioned, prior art teaches that improvement in thermal conductivity for semi-crystalline polymer compositions generally requires a high amount of expensive inorganic filler like, for instance, boron nitride.

As a matter of fact, prior art does neither disclose nor suggest any semi-crystalline polymer composition comprising a specific combination of thermally conductive fillers which could provide improved thermal conductivity while maintaining production costs at a minimum.

Consequently, another objective of the invention is to provide a semi-crystalline polymer composition having an improved balance between thermal conductivity performance level and cost, notably cost of the loading in thermally conductive filler.

In order to appreciate the benefit brought by the invention as regard to this particular issue, the overall cost of the thermally conductive fillers incorporated in each polymer composition (E1) to (E5) was estimated on the basis of a unitary weight amount of polymer composition and such costs were expressed on a relative basis, referring to composition (E1). The results of the cost assessment are also presented in Table 2.

**Table 2 Thermal conductivity performance levels and relative costs of the thermally conductive fillers**

| Properties | Semi-crystalline Polymer Compositions | | | | |
|---|---|---|---|---|---|
| | E1 (according to the invention) | E2 (according to the invention) | E3 (control) | E4 (control) | E5 (control) |
| Thermal conductivity performance level | VERY HIGH | HIGH | MEDIUM | LOW | HIGH |
| Relative cost of the total amount of thermally conductive fillers (compared to E1) | 1.00 | 0.68 | 0.14 | 0.10 | 3.03 |

The Applicant found that, surprisingly, polymer compositions (E1) and (E2) (according to the invention) were characterized by thermal conductivity levels significantly higher than those of polymer composition (E3) (control), although polymer compositions (E1) and (E2) did not comprise a total amount of thermally conductive fillers higher than that of composition (E3).

The Applicant also found that, surprisingly, polymer compositions (E1) and (E2) were able to provide thermal conductivity levels similar or even better than that of polymer composition (E5) (control), although compositions (E1) and (E2) contained boron nitride in an amount equal to only about one-third to one-fifth of the amount of boron nitride contained in composition (E5), and a total amount of thermal conductive filler [i.e. (OX)+(NI)] close to that of composition (E5).

Moreover, the results of the cost assessment presented in Table 2 indicate that the cost of the total amount of thermally conductive filler included in compositions (E1) and (E2) was only of from about one-third up to about one-fifth of the cost of the thermal conductive filler included in composition (E5).

These results show thus that invented semi-crystalline polymer compositions comprising a specific combination of at least one oxide and at least one nitride are able to exhibit a very favorable balance of properties, notably offering similar or improved thermal conductivity performance levels while strongly reducing production costs, when compared to the prior art compositions.

## Claims

1. A polymer composition comprising
• at least one semi-crystalline polymer (SCP) chosen from polyamides, and
• at least one oxide (OX) chosen from acid oxides of an element having an electronegativity of at most 2.2 and amphoteric oxides and,
• at least one nitride (NI) of an element having an electronegativity of from 1.3 to 2.5,
wherein the oxide (OX) over nitride (NI) weight ratio [(OX):(NI)] is above 2.0 and is below 12.

2. The polymer composition according to claim 1, wherein the semi-crystalline polymer (SCP) has a heat deflection temperature of above 80°C under a load of 1.82 MPa when measured according to ASTM D648.

3. The polymer composition according to claim 1 or 2, wherein the semi-crystalline polymer (SCP) is a polycondensation polymer comprising recurring units comprising at least one arylene group.

4. The polymer composition according to anyone of the preceding claims, wherein the semi-crystalline polymer (SCP) is a polyterephthalamide.

5. The polymer composition according to anyone of the preceding claims, wherein the semi-crystalline polymer (SCP) is contained in the polymer composition in an amount of at least 20 wt % (based on the total weight of the composition).

6. The polymer composition according to anyone of the preceding claims, wherein the semi-crystalline polymer (SCP) is present in an amount of at most 60 wt % (based on the total weight of the composition).

7. The polymer composition according to anyone of the preceding claims, wherein the oxide (OX) is an amphoteric oxide.

8. The polymer composition according to anyone of the preceding claims, wherein the oxide (OX) is an oxide of an element having an electronegativity of at most 2.0, and preferably at most 1.8.

9. The polymer composition according to claim 8, wherein the oxide (OX) is an of an element having an electronegativity of at most 1.6.

10. The polymer composition according to anyone of claims 7 to 9,
wherein the oxide (OX) is an oxide of an element having an electronegativity of at least 1.4.

11. The polymer composition according to claim 7, wherein the oxide (OX) is aluminum oxide.

12. The polymer composition according to anyone of the preceding claims, wherein the nitride (NI) is a nitride of an element having an electronegativity of at least 1.6.

13. The polymer composition according to claim 12, wherein the nitride (NI) is a nitride of an element having an electronegativity of at least 1.8.

14. The polymer composition according to claim 12 or 13, wherein the nitride (NI) is the nitride of an element having an electronegativity of at most 2.2.

15. The polymer composition according to anyone of claims 12 to 14,
wherein the nitride (NI) is chosen from nitrides of an element of chosen from Groups IIIa, IVa, IVb, Va, Vb, VIa, VIb, VIIb and VIII of the Periodic Table of the Elements.

16. The polymer composition according to claim 15, wherein the nitride (NI) is chosen from nitrides of an element of Group IIIa of the Periodic Table of the Elements.

17. The polymer composition according to claim 16, wherein the nitride (NI) is boron nitride.

18. The polymer composition according to anyone of the preceding claims, wherein the oxide (OX) and the nitride (NI) are contained in the polymer composition in a cumulated amount [(OX) + (NI)] of above 40 wt % (based on the total weight of the composition).

19. The polymer composition according to claim 18, wherein the oxide (OX) and the nitride (NI) are contained in the polymer composition in a cumulated amount [(OX) + (NI)] of above 50 wt % (based on the total weight of the composition).

20. The polymer composition according to anyone of the preceding claims, wherein the oxide (OX) and the nitride (NI) are contained in the polymer composition in a cumulated amount [(OX) + (NI)] of below 80 wt % (based on the total weight of the composition).

21. The polymer composition according to claim 20, wherein the oxide (OX) and the nitride (NI) are contained in the polymer composition in a cumulated amount [(OX) + (NI)] of below 70 wt % (based on the total weight of the composition).

22. The polymer composition according to anyone of the preceding claims, wherein the oxide (OX) over nitride (NI) weight ratio [(OX):(NI)] is above 2.5.

23. The polymer composition according to anyone of the previous claims, wherein the oxide (OX) over nitride (NI) weight ratio [(OX):(NI)] is below 6.0.

24. The polymer composition according to claim 23, wherein the oxide (OX) over nitride (NI) weight ratio [(OX):(NI)] is below 4.0.

25. The polymer composition according to claim 24, wherein the oxide (OX) over nitride (NI) weight ratio [(OX):(NI)] is below 3.5.

26. An article comprising the polymer composition according to anyone of claims 1 to 25.

27. An article comprising at least one part comprising the polymer composition according to anyone of claims 1 to 25.

28. A part of an article comprising the polymer composition according to anyone of claims 1 to 25.

29. The part according to claim 28, which is an encapsulating part.

30. The article according to claim 26 or 27, which is chosen from electronic components, optoelectronic components, computer components, surface-mounted technology components and cell phone components.

31. The article according to claim 26 or 27, which is chosen from sensors such as automotive sensors.

32. The article according to claim 26 or 27, which is chosen from electric components such as electric motor end caps, transformer components and battery components.

33. The article according to claim 26 or 27, which is chosen from fuel cells components.

34. The article according to claim 26 or 27, which is chosen from cookwares and heat elements.

35. The article according to claim 26 or 27, which is chosen from mechanical components such as bearings and bushings.

36. The article according to claim 26 or 27, which is a power tool armature encapsulated by an overmold part consisting of the polymer composition.

37. The article according to claim 26 or 27, which is a disc drive actuator assembly comprising an actuator coil encapsulated and supported by an overmold part consisting of the polymer composition.

38. The article according to claim 26 or 27, which is an optoelectronic component that emits a radiation.

39. The article according to claim 38, wherein the optoelectronic component that emits a radiation is a LED.

40. The article according to claim 27, wherein the article is a LED and the part is chosen from basic housings and heatsink slugs.

41. The part according to claim 28, said part being susceptible of acting as reflector in an emission apparatus.

42. The part according to claim 41, wherein the emission apparatus is a LED.

43. The part according to claim 42, which is susceptible of constituting the basic housing and/or the heatsink slug of the LED.

## Patentansprüche

1. Polymerzusammensetzung, umfassend :
• mindestens ein halbkristallines Polymer (SCP), gewählt aus Polyamiden, und
• mindestens ein Oxid (OX), gewählt aus Säureoxiden eines Elements mit einer Elektronegativität von höchstens 2,2 und amphoteren Oxiden, und
• mindestens ein Nitrid (NI) eines Elements mit einer Elektronegativität von 1,3 bis 2,5,
wobei das Oxid (OX)-zu-Nitrid (NI)-Gewichtsverhältnis [(OX):(NI)] über 2,0 und unter 12 liegt.

2. Polymerzusammensetzung gemäß Anspruch 1, wobei das halbkristalline Polymer (SCP) eine Wärmestandsfestigkeitstemperatur von über 80°C unter einer Belastung von 1,82 MPa bei einer Messung gemäß ASTM D648 aufweist.

3. Polymerzusammensetzung gemäß Anspruch 1 oder 2, wobei das halbkristalline Polymer (SCP) ein Polykondensationspolymer ist, welches Wiederholungseinheiten umfasst, die mindestens eine Arylengruppe umfassen.

4. Polymerzusammensetzung gemäß einem der vorausgehenden Ansprüche, wobei das halbkristalline Polymer (SCP) ein Polyterephthalamid ist.

5. Polymerzusammensetzung gemäß einem der vorausgehenden Ansprüche, wobei das halbkristalline Polymer (SCP) in der Polymerzusammensetzung in einer Menge von mindestens 20 Gew.-% (bezogen auf das Gesamtgewicht der Zusammensetzung) enthalten ist.

6. Polymerzusammensetzung gemäß einem der vorausgehenden Ansprüche, wobei das halbkristalline Polymer (SCP) in einer Menge von höchstens 60 Gew.-% (bezogen auf das Gesamtgewicht der Zusammensetzung) vorhanden ist.

7. Polymerzusammensetzung gemäß einem der vorausgehenden Ansprüche, wobei das Oxid (OX) ein amphoteres Oxid ist.

8. Polymerzusammensetzung gemäß einem der vorausgehenden Ansprüche, wobei das Oxid (OX) ein Oxid eines Elements mit einer Elektronegativität von höchstens 2,0 und vorzugsweise von höchstens 1,8 ist.

9. Polymerzusammensetzung gemäß Anspruch 8, wobei das Oxid (OX) ein Oxid eines Elements mit einer Elektronegativität von höchstens 1,6 ist.

10. Polymerzusammensetzung gemäß einem der Ansprüche 7 bis 9, wobei das Oxid (OX) ein Oxid eines Elements mit einer Elektronegativität von mindestens 1,4 ist.

11. Polymerzusammensetzung gemäß Anspruch 7, wobei das Oxid (OX) Aluminiumoxid ist.

12. Polymerzusammensetzung gemäß einem der vorausgehenden Ansprüche, wobei das Nitrid (N1) ein Nitrid eines Elements mit einer Elektronegativität von mindestens 1,6 ist.

13. Polymerzusammensetzung gemäß Anspruch 12, wobei das Nitrid (N1) ein Nitrid eines Elements mit einer Elektronegativität von mindestens 1,8 ist.

14. Polymerzusammensetzung gemäß Anspruch 12 oder 13, wobei das Nitrid (NI) das Nitrid eines Elements mit einer Elektronegativität von höchstens 2,2 ist.

15. Polymerzusammensetzung gemäß einem der Ansprüche 12 bis 14, wobei das Nitrid (NI) gewählt ist aus Nitriden eines Elements, das aus den Gruppen IIIa, IVa, IVb, Va, Vb, VIa, VIb, VIIb und VIII des Periodensystems der Elemente gewählt ist.

16. Polymerzusammensetzung gemäß Anspruch 15, wobei das Nitrid (NI) aus Nitriden eines Elements der Gruppe IIIa des Periodensystems der Elemente gewählt ist.

17. Polymerzusammensetzung gemäß Anspruch 16, wobei das Nitrid (NI) Bornitrid ist.

18. Polymerzusammensetzung gemäß einem der vorausgehenden Ansprüche, wobei das Oxid (OX) und das Nitrid (N1) in der Polymerzusammensetzung in einer Gesamtmenge [(OX)+(NI)] von über 40 Gew.-% (bezogen auf das Gesamtgewicht der Zusammensetzung) enthalten sind.

19. Polymerzusammensetzung gemäß Anspruch 18, wobei das Oxid (OX) und das Nitrid (NI) in der Polymerzusammensetzung in einer Gesamtmenge [(OX)+(NI)] von über 50 Gew.-% (bezogen auf das Gesamtgewicht der Zusammensetzung) enthalten sind.

20. Polymerzusammensetzung gemäß einem der vorausgehenden Ansprüche, wobei das Oxid (OX) und das Nitrid (NI) in der Polymerzusammensetzung in einer Gesamtmenge [(OX)+(NI)] von unter 80 Gew.-% (bezogen auf das Gesamtgewicht der Zusammensetzung) enthalten sind.

21. Polymerzusammensetzung gemäß Anspruch 20, wobei das Oxid (OX) und das Nitrid (N1) in der Polymerzusammensetzung in einer Gesamtmenge [(OX)+(NI)] von unter 70 Gew.% (bezogen auf das Gesamtgewicht der Zusammensetzung) enthalten sind.

22. Polymerzusammensetzung gemäß einem der vorausgehenden Ansprüche, wobei das Oxid (OX)-zu-Nitrid (NI)-Gewichtsverhältnis [(OX):(NI)] über 2,5 liegt.

23. Polymerzusammensetzung gemäß einem der vorausgehenden Ansprüche, wobei das Oxid (OX)-zu-Nitrid (NI)-Gewichtsverhältnis [(OX):(NI)] unter 6,0 liegt.

24. Polymerzusammensetzung gemäß Anspruch 23, wobei das Oxid (OX)-zu-Nitrid (NI)-Gewichtsverhältnis [(OX):(NI)] unter 4,0 liegt.

25. Polymerzusammensetzung gemäß Anspruch 24, wobei das Oxid (OX)-zu-Nitrid (NI)-Gewichtsverhältnis [(OX):(NI)] unter 3,5 liegt.

26. Gegenstand, umfassend die Polymerzusammensetzung gemäß einem der Ansprüche 1 bis 25.

27. Gegenstand, umfassend mindestens einen Teil, welcher die Polymerzusammensetzung gemäß einem der Ansprüche 1 bis 25 umfasst.

28. Teil eines Gegenstands, welcher die Zusammensetzung gemäß einem der Ansprüche 1 bis 25 umfasst.

29. Teil gemäß Anspruch 28, welcher ein Einbettungsteil ist.

30. Gegenstand gemäß Anspruch 26 oder 27, gewählt aus elektronischen Komponenten, optoelektronischen Komponenten, Rechnerkomponenten, oberflächenmontierten Technologiekomponenten und Handykomponenten.

31. Gegenstand gemäß Anspruch 26 oder 27, gewählt aus Sensoren, wie etwa Kraftfahrzeugsensoren.

32. Gegenstand gemäß Anspruch 26 oder 27, gewählt aus elektrischen Komponenten, wie etwa Endkappen von Elektromotoren, Transformatorenkomponenten und Batteriekomponenten.

33. Gegenstand gemäß Anspruch 26 oder 27, gewählt aus Brennstoffzellenkomponenten.

34. Gegenstand gemäß Anspruch 26 oder 27, gewählt aus Kochgeschirr und Heizelementen.

35. Gegenstand gemäß Anspruch 26 oder 27, gewählt aus mechanischen Komponenten, wie Kugellagern und Muffen bzw. Buchsen.

36. Gegenstand gemäß Anspruch 26 oder 27, welcher eine Powertool-Armatur ist, eingebettet in ein Overmold- bzw. Überspritzteil, das aus der Polymerzusammensetzung besteht.

37. Gegenstand gemäß Anspruch 26 oder 27, welcher ein Aktuatorsystem eines Scheibenantriebs bzw. Plattenlaufwerks ist, umfassend eine Aktuatorspule, die in ein aus der Polymerzusammensetzung bestehendes und von diesem getragenes Überspritzteil eingebettet ist.

38. Gegenstand gemäß Anspruch 26 oder 27, welcher eine optoelektronische Komponente ist, die eine Strahlung aussendet.

39. Gegenstand gemäß Anspruch 38, wobei die eine Strahlung aussendende optoelektronische Komponente eine LED ist.

40. Gegenstand gemäß Anspruch 27, wobei der Gegenstand eine LED ist und das Teil aus Grundgehäusen und Wärmesenkebutzen gewählt ist.

41. Teil gemäß Anspruch 28, wobei das Teil als ein Reflektor in einer Emissionsvorrichtung fungieren kann.

42. Teil gemäß Anspruch 41, wobei die Emissionsvorrichtung eine LED ist.

43. Teil gemäß Anspruch 42, welches zur Bildung des Grundgehäuses und/oder des Wärmesenkebutzens der LED fähig ist.

## Revendications

1. Composition polymère comprenant
• au moins un polymère semi-cristallin (SCP) choisi parmi les polyamides,
• au moins un oxyde (OX) choisi parmi les oxydes acides d'un élément ayant une électronégativité d'au plus 2,2 et les oxydes amphotères, et
• au moins un nitrure (NI) d'un élément ayant une électronégativité de 1,3 à 2,5, dans laquelle le rapport pondéral de l'oxyde (OX) au nitrure (NI) [(OX):(NI)] est supérieur à 2,0 et inférieur à 12.

2. Composition polymère selon la revendication 1, dans laquelle le polymère semi-cristallin (SCP) a une température de déflection à la chaleur de plus de 80 °C sous une charge de 1,82 MPa lorsque mesurée selon la norme ASTM D648.

3. Composition polymère selon la revendication 1 ou 2, dans laquelle le polymère semi-cristallin (SCP) est un polymère de polycondensation comprenant des motifs répétitifs comprenant au moins un groupe arylène.

4. Composition polymère selon l'une quelconque des revendications précédentes, dans laquelle le polymère semi-cristallin (SCP) est un polytéréphtalamide.

5. Composition polymère selon l'une quelconque des revendications précédentes, dans laquelle le polymère semi-cristallin (SCP) est contenu dans la composition polymère dans une quantité d'au moins 20 % en poids (rapporté au poids total de la composition).

6. Composition polymère selon l'une quelconque des revendications précédentes, dans laquelle le polymère semi-cristallin (SCP) est présent dans une quantité d'au plus 60 % en poids (rapporté au poids total de la composition).

7. Composition polymère selon l'une quelconque des revendications précédentes, dans laquelle l'oxyde (OX) est un oxyde amphotère.

8. Composition polymère selon l'une quelconque des revendications précédentes, dans laquelle l'oxyde (OX) est un oxyde d'un élément ayant une électronégativité d'au plus 2,0, et de préférence au plus 1,8.

9. Composition polymère selon la revendication 8, dans laquelle l'oxyde (OX) est un oxyde d'un élément ayant une électronégativité d'au plus 1,6.

10. Composition polymère selon l'une quelconque des revendications 7 à 9, dans laquelle l'oxyde (OX) est un oxyde d'un élément ayant une électronégativité d'au moins 1,4.

11. Composition polymère selon la revendication 7, dans laquelle l'oxyde (OX) est un oxyde d'aluminium.

12. Composition polymère selon l'une quelconque des revendications précédentes, dans laquelle le nitrure (NI) est un nitrure d'un élément ayant une électronégativité d'au moins 1,6.

13. Composition polymère selon la revendication 12, dans laquelle le nitrure (NI) est un nitrure d'un élément ayant une électronégativité d'au moins 1,8.

14. Composition polymère selon la revendication 12 ou 13, dans laquelle le nitrure (NI) est un nitrure d'un élément ayant une électronégativité d'au plus 2,2.

15. Composition polymère selon l'une quelconque des revendications 12 à 14, dans laquelle le nitrure (NI) est choisi parmi les nitrures des éléments des groupes IIIa, IVa, IVb, Va, Vb, VIa, VIb, VIIb et VIII du tableau périodique des éléments.

16. Composition polymère selon la revendication 15, dans laquelle le nitrure (NI) est choisi parmi les nitrures des éléments du groupe IIIa du tableau périodique des éléments.

17. Composition polymère selon la revendication 16, dans laquelle le nitrure (NI) est un nitrure de bore.

18. Composition polymère selon l'une quelconque des revendications précédentes, dans laquelle l'oxyde (OX) et le nitrure (NI) sont contenus dans la composition polymère dans une quantité cumulée [(OX)+(NI)] de plus de 40 % en poids (rapporté au poids total de la composition).

19. Composition polymère selon la revendication 18, dans laquelle l'oxyde (OX) et le nitrure (NI) sont contenus dans la composition polymère dans une quantité cumulée [(OX)+(NI)] de plus de 50 % en poids (rapporté au poids total de la composition).

20. Composition polymère selon l'une quelconque des revendications précédentes, dans laquelle l'oxyde (OX) et le nitrure (NI) sont contenus dans la composition polymère dans une quantité cumulée [(OX)+(NI)] de moins de 80 % en poids (rapporté au poids total de la composition).

21. Composition polymère selon la revendication 20, dans laquelle l'oxyde (OX) et le nitrure (NI) sont contenus dans la composition polymère dans une quantité cumulée [(OX)+(NI)] de moins de 70 % en poids (rapporté au poids total de la composition).

22. Composition polymère selon l'une quelconque des revendications précédentes, dans laquelle le rapport pondéral de l'oxyde (OX) au nitrure (NI) [(OX):(NI)] est supérieur à 2,5.

23. Composition polymère selon l'une quelconque des revendications précédentes, dans laquelle le rapport pondéral de l'oxyde (OX) au nitrure (NI) [(OX):(NI)] est inférieur à 6,0.

24. Composition polymère selon la revendication 23, dans laquelle le rapport pondéral de l'oxyde (OX) au nitrure (NI) [(OX):(NI)] est inférieur à 4,0.

25. Composition polymère selon la revendication 24, dans laquelle le rapport pondéral de l'oxyde (OX) au nitrure (NI) [(OX):(NI)] est inférieur à 3,5.

26. Article comprenant la composition polymère selon l'une quelconque des revendications 1 à 25.

27. Article comprenant au moins une partie comprenant la composition polymère selon l'une quelconque des revendications 1 à 25.

28. Partie d'un article comprenant la composition polymère selon l'une quelconque des revendications 1 à 25.

29. Partie selon la revendication 28, qui est une partie d'encapsulation.

30. Article selon la revendication 26 ou 27, qui est choisi parmi les composants électroniques, les composants optoélectroniques, les composants d'ordinateur, les composants à technologie de montage en surface, et les composants de téléphone cellulaire.

31. Article selon la revendication 26 ou 27, qui est choisi parmi des capteurs tels que les capteurs automobiles.

32. Article selon la revendication 26 ou 27, qui est choisi parmi des composants électriques tels que les flasques de moteur électrique, les composants de transformateur et les composants de batterie.

33. Article selon la revendication 26 ou 27, qui est choisi parmi les composants de pile à combustible.

34. Article selon la revendication 26 ou 27, qui est choisi parmi les ustensiles de cuisine et les éléments chauffants.

35. Article selon la revendication 26 ou 27, qui est choisi parmi des composants mécaniques tels que les paliers et les bagues.

36. Article selon la revendication 26 ou 27, qui est une armature d'outil électrique encapsulée par une partie de surmoulage constituée par la composition polymère.

37. Article selon la revendication 26 ou 27, qui est un ensemble actionneur de lecteur de disque comprenant une bobine d'actionneur encapsulée et soutenue par une partie de surmoulage constituée par la composition polymère.

38. Article selon la revendication 26 ou 27, qui est un composant optoélectronique qui émet un rayonnement.

39. Article selon la revendication 38, dans lequel le composant optoélectronique qui émet un rayonnement est une diode électroluminescente.

40. Article selon la revendication 27, l'article étant une diode électroluminescente et la partie étant choisie parmi les boîtiers de base et les plaques de dissipation thermique.

41. Partie selon la revendication 28, ladite partie étant susceptible d'agir comme réflecteur dans un appareil d'émission.

42. Partie selon la revendication 41, dans laquelle l'appareil d'émission est une diode électroluminescente.

43. Partie selon la revendication 42, qui est susceptible de constituer le boîtier de base et/ou la plaque de dissipation thermique de la diode électroluminescente.
